# EUROPÄISCHE PATENTANMELDUNG

(11) **EP 3 082 103 A1**
(43) Veröffentlichungstag der Anmeldung: **19.10.2016**
(21) Anmeldenummer: 16000796.9
(22) Anmeldetag: 07.04.2016
(51) Int. Cl.: G06T 7/00

(54) **VERFAHREN ZUR RICHTUNGSKALIBRIERUNG VON KAMERAS EINES KAMERASYSTEMS**

(30) Priorität: 17.04.2015 DE 102015004943
(71) Anmelder: Diehl BGT Defence GmbH & Co. KG, 88662 Überlingen (DE)
(72) Erfinder: Gagel, Florian, DE - 88690 Uhldingen-Mühlhofen (DE); Kushauer, Jörg, DE - 88693 Deggenhausertal (DE)
(74) Vertreter: Diehl Patentabteilung

(57) **Zusammenfassung**

Die Erfindung geht aus von einem Verfahren zur Richtungskalibration von Kameras (4) eines Kamerasystems (2), bei dem die Kameras (4) jeweils ein Bild (8) einer Umgebung (6) aufnehmen.

Um eine Richtungskalibration mit geringen Parallaxenfehlern zu erreichen, wird vorgeschlagen, dass im Überlappungsbereich (24) zweier Bilder (8) zweier Kameras (4) in beiden Bildern (8) jeweils Schlüsselpunkte (26) ermittelt werden, zu jedem Schlüsselpunkt (26) zumindest ein mehrdimensionaler Deskriptor ermittelt wird, die Deskriptoren der beiden Bilder (8) verglichen und den Deskriptoren zugeordnete Schlüsselpunkte (26) der beiden Bilder (8) bei einem Vergleichsergebnis über einem Grenzwert einander zugeordnet werden.

## Beschreibung

Die Erfindung betrifft ein Verfahren zur Richtungskalibration von Kameras eines Kamerasystems, bei dem die Kameras jeweils ein Bild einer Umgebung aufnehmen.

Zur Steuerung eines Flugkörpers zu einem Objekt im Raum ist es notwendig, die Position des Objekts im Raum zu kennen. Zur Bestimmung einer Position eines Objekts im Raum werden Kameras verwendet, deren Ausrichtung im Raum bekannt ist, und die ein Bild des Objekts aufnehmen. Aus der Lage der Abbildung des Objekts in dem Bild und der bekannten Bildrichtung im Raum kann die Richtung des Objekts bestimmt werden. Um eine genaue Richtungskalibration der einzelnen Bildpunkte der Kamera im Raum zu erhalten, wird eine Kalibration mit einem vorbekannten Muster vorgenommen. Beispielsweise nimmt die Kamera ein definiertes Muster, wie ein Schachbrett, ein Gitternetz oder dergleichen auf, so dass die Kameraparameter der Kamera bestimmt werden können.

Um einen großen Winkelbereich des Raums präzise erfassen zu können, können mehrere Kameras neben einander aufgestellt werden, die den großen Raumwinkelbereich gemeinsam abdecken. Die Bilder der Kameras überlappen einander, und der Überlappungsbereich kann durch eine Gesamtkalibration erreicht werden. Hierbei nehmen alle Kameras ein definiertes Muster auf, so dass die Ausrichtung der Kameras zueinander und die Überlappung der einzelnen Bilder erfasst werden kann. Durch die bekannte Lage des Musters relativ zu allen Kameras kann den allen Bildpunkten der Kameras eine Raumrichtung zugewiesen werden, so dass auf diese Weise eine Richtungskalibration der Kameras erfolgt.

Es ist eine Aufgabe der vorliegenden Erfindung, ein Verfahren zur Richtungskalibration von Kameras eines Kamerasystems anzugeben, das eine Richtungskalibration mit geringen Parallaxenfehlern ermöglicht.

Diese Aufgabe wird durch ein Verfahren der eingangs genannten Art gelöst, bei dem im Überlappungsbereich zweier Bilder zweier Kameras in beiden Bildern jeweils Schlüsselpunkte ermittelt werden, zu jedem Schlüsselpunkt zumindest ein mehrdimensionaler Deskriptor ermittelt wird. Die Deskriptoren der beiden Bilder werden verglichen und den Deskriptoren zugeordnete Schlüsselpunkte der beiden Bilder können bei einem Vergleichsergebnis über einem Grenzwert einander zugeordnet werden. Weiter können die Bilder entsprechend der Zuordnung zusammengefügt werden.

Die Erfindung geht von der Überlegung aus, dass die Verwendung eines Referenzmusters in der Regel den Nachteil von Parallaxenfehlern zwischen den Kameras mit sich bringt. Zur Richtungskalibration wird beispielsweise das definierte Referenzmuster, wie ein Schachbrett oder Gitter im sichtbaren Spektralbereich, ein Heizdrahtkreuz oder hot-spots auf einem Raster für eine Kalibration im infraroten Spektralbereich, vor den Kameras bewegt, so dass es sich auf den Bildpunkten der einzelnen Kameradetektoren abbildet. Über eine Ausgleichsfit kann dann eine Fehlerminimierung über die zu bestimmenden Kameraparameter durchgeführt werden, um eine Tonnenverzerrung, eine Kissenverzerrung und einen relativen Winkel der Kameras zueinander im Überlappungsbereich zu bestimmen. Die Verwendung eines Referenzmusters hat jedoch den Nachteil, dass es stets in einer relativ geringen Entfernung zu den Kameras positioniert werden muss. Eine gute Kalibration im Nahbereich kann jedoch Parallaxenfehler im Fernbereich nicht unbedingt verhindern. Es muss daher ein Kompromiss zwischen der möglichst großen Entfernung zum Referenzmuster und der Auflösbarkeit des Referenzmusters gefunden werden. Um den Parallaxenfehler zu verringern, kann dieser geschätzt werden, um ihn mit beispielsweise Epipolargeometrie oder Fundamentalmatrix zu verringern.

Durch das erfindungsgemäße Verfahren kann anstelle des definierten Referenzmusters ein im Wesentlichen beliebiges Bild der Umgebung treten, das im Überlappungsbereich genügend charakteristische Bildmerkmale zur Bildung der Schlüsselpunkte aufweist. Dies kann im regulären Betrieb des Kamerasystems erfolgen, bei dem die Kameras Bilder der Umgebung aufnehmen. Durch die Zuweisung der Schlüsselpunkte der beiden Bilder zueinander ist bekannt, dass die Richtung zu diesen Punkten in die gleiche Raumrichtung weist. Hierdurch kann eine relative Richtungskalibration der beiden Kameras miteinander durchgeführt werden. Ist die absolute Ausrichtung der Kameras, beispielsweise im Bildzentrum, bekannt, kann auch die absolute Richtungskalibration der Überlappungspunkte beziehungsweise Schlüsselpunkte durchgeführt werden.

Das Verfahren ist besonders geeignet zum Zuordnen von Bildpunkten mehrerer Kameras des Kamerasystems jeweils zu vorbestimmten Raumrichtungen, beispielsweise in einer sogenannten Bildtapete. Weiter kann anhand der Zuordnung eine relative Ausrichtung der Kameras zueinander bestimmt werden.

Zweckmäßigerweise wird die Richtungskalibration mehrfach wiederholt, insbesondere in einer bewegten Umgebungsszene. Dies kann während des regulären Betriebs des Kamerasystems geschehen. Es werden immer neue Schlüsselpunkte in den hintereinander aufgenommenen Bildern gebildet, so dass die pixelweise Zuordnung von Schlüsselpunkten der beiden Bilder im Überlappungsbereich immer vollständiger wird. Nach und nach kann die gesamte Bildfläche der Überlappungsbereichs kalibriert werden.

Vorteilhafterweise wird die Raumrichtung eines Objekts, das in zumindest einem Einzelbild, zweckmäßigerweise in einem Überlappungsbereich zweier Einzelbilder aufgenommen ist, bestimmt. Es kann nun eine mechanische Einheit anhand der ermittelten Raumrichtung des Objekts gesteuert werden. Es kann beispielsweise eine Optik auf das Objekt ausgerichtet werden, die das Objekt höher aufgelöst als von den Kameras des Kamerasystems, so dass das Objekt so hoch aufgelöst aufgeklärt werden kann. Ebenso ist es möglich ein Radarsystem auf das Objekt, also in die ermittelte Raumrichtung, auszurichten. Auch ein Laser oder ein anderes Wirkmittel, beispielsweise ein Flugkörper oder ein Geschoss, können anhand der ermittelten Raumrichtung in ihrem Flug beziehungsweise in ihrer Abschussrichtung ausgerichtet werden.

Die Schlüsselpunkte können mit einem Merkmalsdetektor aus den beiden Bildern ermittelt werden. Ein Merkmalsdetektor ist in der Lage, Punkte in einem Bild zu finden, die das Bild charakterisieren. Ein guter Merkmalsdetektor ist auch bei einer Skalierung, Rotation, bei einer geometrischen Transformation und Beleuchtungsveränderungen des aufgenommenen Zielobjekts in der Lage, die gleichen Schlüsselpunkte in den erneut aufgenommenen Bild des Zielobjekts zu finden.

Es sind eine Reihe von geeigneten Merkmalsdetektoren bekannt, wie beispielsweise der SIFT-Merkmalsdetektor (Scale-Invariant Feature Transform), der SURF-Merkmalsdetektor (Speeded Up Robust Features), der ORB-Merkmalsdetektor (Oriented Fast and Rotated Brief), sowie weitere Verfahren. Das SIFT-Verfahren und der SIFT-Merkmalsdetektor sind beispielsweise beschrieben in Lowe, David G.: Object recognition from local scale-invariant features; Computer vision, 1999; The proceedings of the seventh IEEE international conference on Bd. 2 leee, 1999, S. 1150-1157, und in Lowe, David G.: Distinctive image features from scale-invariant keypoints; International journal of computer vision 60 (2004), Nr. 2, S. 91-110. Das SURF-Verfahren mit dem SURF-Merkmalsdetektor ist beispielsweise beschrieben in Bay, Herbert; Tuytelaars, Tinne; Van Gool, Luc: Surf: Speeded up robust features; Computer Vision-ECCV 2006. Springer, 2006, S. 404-417. Und das ORB-Verfahren mit dem ORB-Merkmalsdetektor ist beispielsweise beschrieben in Rublee, Ethan; Rabaud, Vincent; Konolige, Kurt; Bradski, Gary: ORB: an efficient alternative to SIFT or SURF. In: Computer Vision (ICCV), 2011 IEEE International Conference on IEEE, 2011, S. 2564-2571. Andere bekannte Verfahren für eine Merkmalsfindung und einen automatischen Merkmalsvergleich sind beispielsweise Laplacian of Gaussian (LoG), sowie Normalized Cross-Correlation Function (NCCF). Es können aber auch andere Verfahren verwendet werden, die für einen automatischen Vergleich von Schlüsselpunkten bzw. Deskriptoren geeignet erscheinen.

Vor der Ermittlung der Schlüsselpunkte können die beiden Bilder, aus denen die Schlüsselpunkte gewonnen werden sollen, mit einem Gauß-Filter geglättet werden, um es von Bildrauschen zu bereinigen. Nach dem Ermitteln der Schlüsselpunkte können diese in einem weiteren Verfahrensschritt auf ihre Robustheit untersucht werden, wobei letztendlich zweckmäßigerweise nur solche Schlüsselpunkte ausgewählt werden, die vorgegebenen Stabilitätsansprüchen genügen. Robust sind beispielsweise solche Schlüsselpunkte, die unempfindlich gegen perspektivische Verzerrung und/oder Rotation sind. Dafür geeignet sind beispielsweise Schlüsselpunkte, deren Bildeigenschaften von ihrem Hintergrund abweichen. Eine Rotationsstabilität kann erreicht werden, wenn einem Schlüsselpunkt eine oder mehrere Orientierung/en zugewiesen wird, basierend auf den Orientierungen der umliegenden Bildgradienten. Zukünftige Berechnungen beziehungsweise Vergleiche können nun auf der Grundlage von Bilddaten durchgeführt werden, die relativ zu den zugewiesenen Orientierungen, und insbesondere auch Skalierungen und Positionierungen, transformiert wurden, um Invarianz für eben diese Transformationen zu gewährleisten.

Aus den so gefundenen Schlüsselpunkten können nun die Deskriptoren ermittelt werden. Hierzu werden die einen Schlüsselpunkt umgebenden Bildgradienten ermittelt, die in einem mehrdimensionalen Merkmalsvektor zusammengefasst werden können. Auch dieser Merkmalsvektor ist zweckmäßigerweise robust gegen Änderungen in der Beleuchtung, der Verzerrung, der Rotation und dergleichen. Ein Deskriptor enthält neben seinen Bildmerkmalen am Schlüsselpunkt zweckmäßigerweise auch die Koordinaten seines Schlüsselpunkts, so dass der Schlüsselpunkt im Deskriptor enthalten ist.

Ein nachfolgender Vergleich der Deskriptoren eines Bilds mit den Deskriptoren des anderen Bilds erfolgt mit einem geeigneten Algorithmus, beispielsweise dem Random Sample Consensus-Algorithmus (RANSAC) oder dem FLANN-Matcher. Allgemein gesprochen kann zum Vergleich von Deskriptoren die Distanzfunktion verwendet werden, die die Vektordistanz, also den Richtungsunterschied zweier Vektoren, bestimmt. Dies kann jedoch bei Bildern, in denen sich gewisse Objekte wiederholen, zu mehrdeutigen Ergebnissen führen. In der Praxis kann deshalb ein Distanzquotient verwendet werden, wobei der beste Match, also der kleinste Abstand, durch den zweitbesten Match geteilt wird. Sehr ähnlichen Ergebnissen kann nun eine kleinere Wahrscheinlichkeit zugeordnet werden, dass der gefundene Match korrekt ist. Beim SIFT-Verfahren können k-d Trees oder andere Suchbäume verwendet werden. Für den Brief-Merkmalsdetektor aus dem ORB-Verfahren kann die Hamming-Distanz der Bit Strings der Deskriptoren verwendet werden. Um die Suche der nächsten Nachbarn zu optimieren, kann auch Locality Sensitive Haching verwendet werden, sodass ähnliche Bit Strings so gehacht werden, dass sie mit großer Wahrscheinlichkeit in denselben Baskets landen.

Beispielhaft wird im Folgenden der SIFT-Merkmalsdetektor ausführlicher beschrieben. Von dem der Analyse zu unterziehenden Bild werden unterschiedlich stark verschwommene Kopien des Bilds erstellt, indem ein Gauß-Filter mehrfach mit zunehmender Stärke auf das Bild angewendet wird oder der gleichbleibende Gauß-Filter immer wieder auf das letzte gefilterte Bild angewendet wird. In der Verschwimmungsskala nebeneinander liegende Bilder werden nun voneinander subtrahiert, was als Difference of Gaussian (DoG) bezeichnet wird. Die unterschiedlich stark verschwommenen Kopien des Bilds und die DoG-Bilder bilden zusammen eine Oktave. Da der Gauß-Filter kontrastreiche Regionen im Bild stark verändert, führt eine Subtraktion der Bilder dazu, dass solche Stellen, an denen sich die Bilder stark verändert haben, also kontrastreiche Regionen, wie Kanten und Ecken, gefunden werden. Die Schlüsselpunkte können nun, wie in der oben angegebenen Veröffentlichung von Lowe aus dem Jahr 2004 vorgeschlagen, gefunden werden. Hierbei werden Schlüsselpunkte, die in einer Fläche liegen und deren Gradienten insofern klein sind, ausgeschieden. Liegt der Schlüsselpunkt auf einer Kante, so ist der Gradient senkrecht zur Kante groß und der Gradient parallel zur Kante klein. Auch solche Schlüsselpunkte werden entfernt. Ein auf einer Ecke liegender Schlüsselpunkt beinhaltet zwei orthogonale und große Gradienten. Solche Schlüsselpunkte sind besonders robust und sollten beibehalten werden.

Da hierbei nur scharfe Konturen im Ausgangsbild gefunden werden, nicht jedoch ebenfalls signifikante weichere Konturen, wird nun - oder bereits vor der Berechnung der Schlüsselpunkte - eine nächsthöhere Oktave gebildet, indem beispielsweise von dem verschwommensten Bild nur jeder zweite Pixel verwendet wird oder das Ausgangsbild verpixelt wird. In einer nächsthöheren Oktave bzw. Bildoktave weist das der Erstellung der Deskriptoren zugrunde liegende Bild also eine niedrigere Auflösung auf als das Bild der niedrigeren Oktave. Die niedrigere Auflösung kann geschaffen werden, indem z.B. je eine Gruppe von Pixeln, insbesondere 2 Pixel oder n x n Pixel, beispielsweise 2 x 2 Pixel, zu einem Pixel zusammengefasst werden, z.B. durch Addition, Mittelwertbildung oder Herausnehmen von nur einem Pixel aus der Gruppe. In dieser zweiten Oktave werden nun wiederum die Schlüsselpunkte bestimmt. Die Schlüsselpunkte umfassen neben ihren x- und y-Koordinaten auch einen Skalenfaktor, also die Angabe der Oktave, aus der sie stammen. Auf diese Weise wird dem Bild des Zielobjekts eine Vielzahl von Schlüsselpunkten zugewiesen. Die den Schlüsselpunkten zugeordneten bzw. die Schlüsselpunkte enthaltenden Deskriptoren enthalten also zweckmäßigerweise auch die Angabe der Oktave, also den Skalenfaktor.

In einer vorteilhaften Ausführungsform der Erfindung werden die Bildpunkte der beiden Bilder in einen Gesamtbildrahmen, beispielsweise in eine sogenannte Bildtapete, eingetragen. Die Bildpunkte des Gesamtbildrahmens bilden zweckmäßigerweise ein Gesamtbild und sind jeweils einer vorbestimmten Raumrichtung zugeordnet. Die Eintragung der Bildpunkte der beiden Bilder in den Gesamtbildrahmen kann mittels eines Positionsverzeichnisses erfolgen, das die Zuordnung der Lage der Bildpunkte der beiden Bilder zur Lage im Gesamtbild enthält.

Vorteilhafterweise kann zur Richtungskalibration aus der Lage der einander zugeordneten Schlüsselpunkte im Gesamtbildrahmen eine Korrekturgröße bestimmt werden, und die Eintragung der Bildpunkte, zweckmäßigerweise sämtlicher Bildpunkte, in den Gesamtbildrahmen kann unter Verwendung der Korrekturgröße erfolgen. Ist beispielsweise eine ursprüngliche Eintragung der Bildpunkte in den Gesamtbildrahmen durch Parallaxeneffekte oder Bildverzerrungen fehlerhaft, so werden einander zugeordnete Schlüsselpunkte im Überlappungsbereich zweier Bilder an verschiedenen Stellen in den Gesamtbildrahmen eingetragen. Da bekannt ist, dass die Schlüsselpunkte der gleichen Raumrichtung zugeordnet sind, kann die Korrekturgröße bestimmt werden, beispielsweise durch eine Richtungsmittelung. Zweckmäßigerweise ist die Korrekturgröße von bekannten anderen Bildverzerrungsparametern der entsprechenden Kamera abhängig, wie Tonnen- oder Kissenverzerrungen oder dergleichen.

Das Verfahren ist besonders geeignet zur Korrektur einer bereits mit früheren Bildern erfolgten Eintragung von Bildpunkten in den Gesamtbildrahmen. Hierfür ist es vorteilhaft, wenn die Kameras jeweils anhand eines Referenzmusters kalibriert worden sind und das Positionsverzeichnis unter Verwendung des Kalibrationsergebnisses erstellt wurde. Die dann noch verbleibenden Parallaxeneffekte können durch die Zuordnung der Schlüsselpunkte durch den Deskriptorenvergleich korrigiert werden.

Eine gute Vorkalibration der Kameras relativ zueinander kann erreicht werde, wenn die Kameras ein Referenzmuster überlappend aufnehmen und das Positionsverzeichnis unter Verwendung des Bildinhalts des Referenzmusters im Überlappungsbereich erstellt wird.

Vorteilhafterweise sind die Kameras starr zueinander befestigt. Eine Richtungskorrelation eines früheren Zeitpunkts kann auch für spätere Zeitpunkte verwendet werden, so dass eine flächenhafte Richtungskorrelation im Überlappungsbereich auch über einen größeren Zeitraum stattfinden kann.

Zur Steuerung von Flugkörpern ist die Verwendung des infraroten Spektralbereichs besonders vorteilhaft. Es ist daher zweckmäßig, wenn die beiden Bilder im infraroten Spektralbereich aufgenommen wurden. Entsprechend wurden auch die Deskriptoren aus den Infrarotbildern ermittelt.

Bei fest zueinander installierten Kameras in einem Kamerasystem kann ein Überlappungsbereich relativ klein im Vergleich zum gesamten Bildbereich eines Bilds einer Kamera sein. Der Deskriptorenvergleich findet zweckmäßigerweise ausschließlich im Überlappungsbereich statt. Es ist insofern vorteilhaft, wenn die Bestimmung des Deskriptors eines Schlüsselpunkts unter Verwendung der Lage des Schlüsselpunkts im Bild erfolgt. Hierzu kann die Lage des Schlüsselpunkts im Bild bestimmt werden, oder es wird die bekannte Lage des Schlüsselpunkts im Bild verwendet. Auf die Bestimmung der Deskriptoren außerhalb des Überlappungsbereichs kann verzichtet werden. Außerdem kann die Art und Weise der Bestimmung des Deskriptors abhängig gemacht werden von der Lage des Schlüsselpunkts im Bild.

Die Lage des Schlüsselpunkts im Bild kann eine relative Lage zum Bildrand des Bilds sein, insbesondere die Entfernung zum Bildrand. Deskriptoren werden unter Verwendung einer Vielzahl von den Schlüsselpunkt umgebenden Bildpunkten erstellt. Ist die Entfernung des Schlüsselpunkts zum Bildrand gering, so können nur solche Bildpunkte berücksichtigt werden, die noch im Bild liegen. Die übliche Deskriptorenberechnung muss insofern abgeändert werden, als dass zum Bildrand hin nur die nahen und noch vorhanden Bildpunkte verwendet werden können. Entsprechend wird der Merkmalsvektor des Deskriptors anders ausfallen, als wenn der Bildrand weiter vom Schlüsselpunkt entfernt wäre und die Deskriptorenbestimmung wie sonst erfolgen kann. Dies ist zweckmäßigerweise auch bei einem Deskriptorenvergleich zu berücksichtigen.

Weiter ist es vorteilhaft, wenn Lage des Schlüsselpunkts relativ zu beiden, einen Überlappungsbereich bildenden Bildern bestimmt wird. Zweckmäßigerweise erfolgt die Bestimmung des Deskriptors unter Verwendung beider Lagen. Liegt der Schlüsselpunkt eines Bilds im Überlappungsbereich sehr nah am Bildrand des anderen Bilds, so sollte auch diese Nähe zum Bildrand des anderen Bilds bei der Bestimmung des zugehörigen Deskriptors berücksichtigt werden, da der Deskriptor des korrespondierenden Schlüsselpunkts des anderen Bilds nicht mit Bildpunkten über den Bildrand hinaus bestimmt werden kann. Erfolgt die Deskriptorenberechnung insofern beispielsweise nur unter Verwendung eines asymmetrischen Pixelbereichs um den Schlüsselpunkt, so ist es vorteilhaft, wenn der Deskriptor des korrespondierenden Schlüsselpunkts des anderen Bilds in gleicher Weise berechnet wird, auch wenn dort kein naher Bildrand dies erfordert. Auf diese Weise sind die Deskriptoren gleichartig berechnet und der Deskriptorenvergleich führt zu zuverlässig guten Ergebnissen.

Gerade am Bildrand ist es vorteilhaft, wenn sich die Berechnung des Deskriptors nur auf einen länglichen Bildbereich um den Schlüsselpunkt stützt, insbesondere auf einen parallel zu einem Bildrand länglichen Bildbereich. Unter länglich kann hierbei eine Abweichung von einer Kreissymmetrie durch beispielsweise ein Abschneiden einer Seite an der Kreissymmetrie, an beiden Seiten, eine ovale Geometrie oder dergleichen verstanden werden.

Weiter ist die Erfindung gerichtet auf ein Kamerasystem mit mehreren, in verschiedene Richtungen ausgerichteten Kameras zur Aufnahme jeweils eines Bilds einer Umgebung und einer Steuereinheit zum Zusammenfügen der Bilder zu einem Gesamtbild.

Um eine gute Richtungskalibration mit geringen Parallaxefehlern zu erreichen, wird vorgeschlagen, dass die Steuereinheit dazu vorbereitet ist, Schlüsselpunkte im Überlappungsbereich eines ersten Bilds einer der Kameras mit einem zweiten Bild einer anderen Kamera zu ermitteln, zu jedem Schlüsselpunkt zumindest ein mehrdimensionalen Deskriptor zu ermitteln, die Deskriptoren der beiden Bilder zu vergleichen und den Deskriptoren zugeordnete Schlüsselpunkte der beiden Bilder bei einem Vergleichsergebnis über einem Grenzwert einander zuzuordnen. Das Zusammenfügen der Bilder kann nun entsprechend der Zuordnung erfolgen.

Die bisher gegebene Beschreibung vorteilhafter Ausgestaltungen der Erfindung enthält zahlreiche Merkmale, die in einigen abhängigen Ansprüchen zu mehreren zusammengefasst wiedergegeben sind. Diese Merkmale können jedoch zweckmäßigerweise auch einzeln betrachtet und zu sinnvollen weiteren Kombinationen zusammengefasst werden, insbesondere bei Rückbezügen von Ansprüchen, so dass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: ein Kamerasystem mit fünf Kameras und einer Steuereinheit, die mit einer Wirkmitteleinheit verbunden ist,
- FIG 2: zwei benachbarte Bilder mit einem Überlappungsbereich und darin ermittelten Schlüsselpunkten und
- FIG 3: ein vergrößert dargestellter Ausschnitt des Überlappungsbereichs mit drei Schlüsselpunkten.

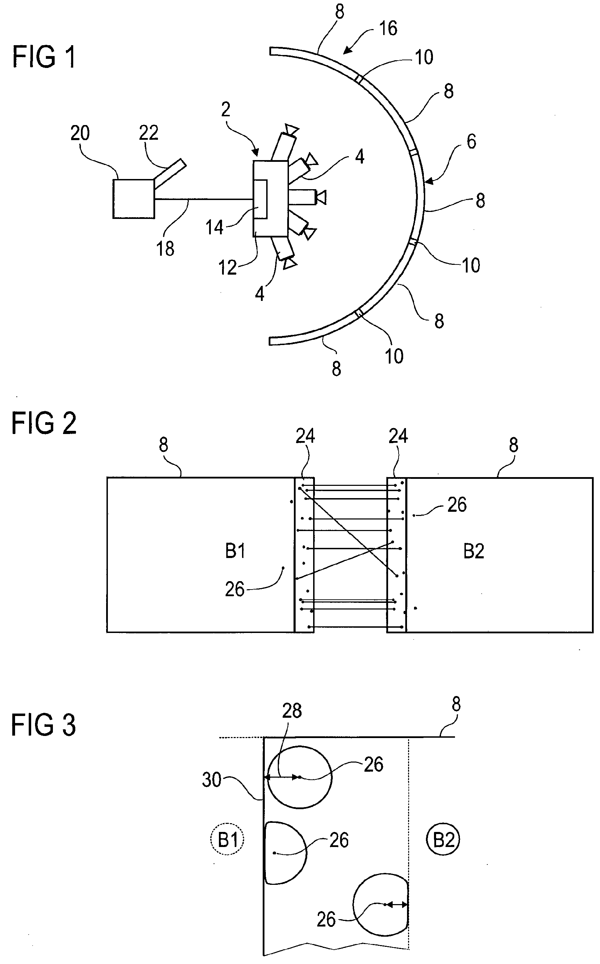

FIG 1 zeigt ein Kamerasystem 2 mit fünf gleichen Kameras 4, die im infraroten Spektralbereich sensitiv sind und Infrarotbilder einer Umgebung 6 aufnehmen. Die Umgebung 6 ist eine Umgebung im Fernfeld, also in einer in Bezug auf eine Optik unendlichen Entfernung, die lediglich der einfacheren Darstellung halber in FIG 1 in der Nähe des Kamerasystems 2 dargestellt ist. Zudem sind in FIG 1 die einzelnen Bilder 8 der fünf Kameras 4 schematisch angedeutet. Benachbarte Bilder 8 überlappen einander in einem kleinen Überlappungsbereich 10, der jeweils etwa 10 Pixel breit ist. Die fünf Kameras 4 sind fest in ein Gehäuse 12 eingeklebt, das zudem eine Steuereinheit 14 beherbergt. Die Steuereinheit 14 verarbeitet die von den Kameras 4 eingehenden Bilddaten und fügt diese in einen Gesamtbildrahmen 16 ein, der sich in einem Winkelbereich von etwa 180° Azimut und 30° Elevation erstreckt. Dieser Gesamtbildrahmen 16, auch Bildtapete genannt, ist in FIG 1 ein einer halbkreisförmigen Darstellung angedeutet. Die einzelnen Bildpunkte der einzelnen Bilder 8 der Kameras 4 werden von der Steuereinheit 14 in den Gesamtbildrahmen 16 eingetragen unter Verwendung eines Positionsverzeichnisses, das die einzelnen Bildpunkte jeweils ihrer Lage im Gesamtbildrahmen 16 zuordnet.

Weiter ist die Steuereinheit 14 dazu vorbereitet, ein Objekt in den Bildern 8 als solches zu erkennen und dessen Lage im Gesamtbildrahmen 16 zu bestimmen. Über eine Datenverbindung 18 ist die Steuereinheit 14 mit einer Wirkmitteleinheit 20 verbunden, die ein Wirkmittel 22, beispielsweise eine Aufklärungsoptik oder eine Flugsteuerungsoptik, auf das Objekt ausrichtet. Insofern dient die Steuereinheit 14 zum Steuern der Ausrichtung des Wirkmittels 22 im Raum in Abhängigkeit der Position einer Abbildung eines Objekts im Gesamtbildrahmen 16.

FIG 2 zeigt zwei der nebeneinander liegenden fünf Bilder 8, die in FIG 2 zur besseren Unterscheidung zusätzlich mit B1 und B2 gekennzeichnet sind. Die beiden Bilder 8 überlappen einander in einem Überlappungsbereich 24, wobei in FIG 2 die beiden Bilder 8 der besseren Darstellung halber auseinander gerückt sind, sodass die beiden Überlappungsbereiche 24 der beiden Bilder 8 getrennt nebeneinander dargestellt sind.

Die beiden Bilder 8 bilden eine Objektszene in der Umgebung 6 des Kamerasystems 2 ab. Diese ist in FIG 2 der Übersichtlichkeit halber weggelassen, weist jedoch eine Vielzahl von charakteristischen Bildmerkmalen auf. Diese werden durch die Steuereinheit 14 auf dem Wege der Bildverarbeitung mit einem Merkmalsdetektor untersucht. Der Merkmalsdetektor ist beispielsweise ein SIFT-Detektor oder SURF-Detektor. Dieser extrahiert eine Vielzahl von Schlüsselpunkten 26 aus dem in den beiden Bildern 8 dargestellten Abbild der Umgebung. In FIG 2 sind nur einige der extrahierten Schlüsselpunkte 26 dargestellt, insbesondere solche, die im Überlappungsbereich 24 liegen. Es ist jedoch auch möglich, dass der Algorithmus mit dem Merkmalsdetektor grundsätzlich ausschließlich Schlüsselpunkte 26 extrahiert, die im Überlappungsbereich 24 liegen. Hierdurch kann ein Rechenaufwand gering gehalten werden.

Nach Ermittlung der Schlüsselpunkte 26 wird zu jedem Schlüsselpunkt 26 ein mehrdimensionaler Merkmalsvektor, der so genannte Deskriptor, entsprechend der oben genannten Verfahren errechnet. Anschließend werden die Deskriptoren der beiden Bilder 8 miteinander verglichen, also die Deskriptoren des Bilds B1 mit den Deskriptoren des Bilds B2. Bei dem Merkmalsvergleich werden Deskriptoren, die einem außerhalb des Überlappungsbereichs 24 liegenden Schlüsselpunkt 26 gehören, außer Acht gelassen. Liegt das Vergleichsergebnis von einem Deskriptor aus dem Bild B1 mit einem anderen Deskriptor aus dem Bild B2 über einem Vergleichsgrenzwert, so werden die Deskriptoren beziehungsweise deren Schlüsselpunkte einander zugeordnet.

Diese Zuordnung ist in FIG 2 durch gerade Linien zwischen den Schlüsselpunkten 26 veranschaulicht. Es ist zu sehen, dass die meisten charakteristischen Bildmerkmale, die im Überlappungsbereich 24 in beiden Bildern 8 dargestellt sind, korrekt einander zugeordnet sind. Es kommt jedoch auch vor, dass die Schlüsselpunktezuordnung nicht korrekt ist, wie in FIG 2 beispielhaft durch zwei schräge Zuordnungslinien veranschaulicht ist. Hier sind zwei Deskriptoren zufällig sehr ähnlich, es liegen insofern punktuell sehr ähnliche Bildinhalte vor.

Vor der Aufnahme der Umgebung 6 wurden die fünf Kameras 4 des Kamerasystems 2 in der Weise kalibriert, dass ein Gitter mit heißen Punkten vor den Kameras bewegt wurde. Die heißen Punkte eines solchen Referenzmusters wurden von den Kameras 4 in einer Abfolge von Bildern aufgenommen, und die Kameras 4 wurden anhand der aufgenommenen Bilder kalibriert. Da in jedem Bild der Kameras 4 die Position der heißen Punkte und damit ihre Raumrichtung im Vergleich zur Kamera 4 beziehungsweise einem Referenzpunkt bekannt war, können die Bildpunkte, die die heißen Punkte abgebildet haben, der entsprechenden Raumrichtung zugeordnet werden und die Kameras 4 in der Weise kalibriert werden. Mittels eines Positionsverzeichnisses wurde den Bildpunkten der einzelnen Kameras 4 jeweils eine Lage in einem Gesamtbildrahmen 16 zugewiesen, sodass aus den Bildern 8 der Kameras 4 ein richtungsgetreues Gesamtbild zusammengesetzt wird. Das Positionsverzeichnis ist in der Steuereinheit 14 hinterlegt, und das Kamerasystem 2 ging derartig kalibriert in den regulären Betrieb.

Während des regulären Betriebs wird den einzelnen Bildpunkten der jeweiligen Bilder 8 die entsprechend dem Positionsverzeichnis angegebene Lage in Gesamtbildrahmen 16 zugewiesen. Die Punktbilddaten werden in diesem Gesamtbildrahmen 16 in ein Gesamtbild gefügt, das die Umgebung des Kamerasystems 2 in einem unverzerrten Gesamtbild wiedergibt. Dieses wird beispielsweise auf einem Bildschirm auf einem Fahrzeug, beispielsweise einem Schiff, dargestellt. Auf diese Weise kann ein Bediener eine Umgebung des Fahrzeugs überwachen. Wird nun ein Objekt, beispielsweise ein anderes Fahrzeug oder ein Flugkörper, im Gesamtbild entdeckt, entweder durch den Bediener oder automatisch durch die Steuereinheit 14, so kann die Lage dieses Objekts im Gesamtbild und damit seine Richtung relativ zu einem Referenzpunkt aus der Lage der Abbildung des Objekts im Gesamtbild bestimmt werden. Entsprechend kann nun die Wirkmitteleinheit 22 auf das Objekt ausgerichtet werden.

Während des Betriebs des Kamerasystems 2 kann durch den Deskriptorenvergleich festgestellt werden, wenn einander zugeordnete Schlüsselpunkte 26 nicht im gleichen Bildpunkt im Gesamtbildrahmen 16 liegen. In diesem Fall kann eine Korrekturgröße bestimmt werden, und die beiden Schlüsselpunkte 26 können unter Verwendung der Korrekturgröße in dem Gesamtbildrahmen 16 eingetragen werden. Sie liegen nun an gleicher Stelle. Hierbei kann der Schlüsselpunkt 26 des später aufgenommenen Bilds B2 seinen zugeordneten Schlüsselpunkt 26 des zuvor aufgenommenen Bilds B1 überdecken. Durch diese Zuordnungskorrektur kann ein Parallaxenfehler im Gesamtbild verringert werden. Außerdem kann entdeckt werden, wenn sich die Kameras 4 in unerwünschter Form relativ zueinander bewegen. Weiter können im Laufe der Betriebsdauer auftretende optische Störungen der einzelnen Kameras 4, beziehungsweise von deren Optik, erkannt werden.

FIG 3 zeigt den Überlappungsbereich 24 in den beiden Bildern B1 und B2 ausschnittsweise in einer vergrößerten Darstellung. Dargestellt ist der Überlappungsbereich 24 des Bilds B2, wohingegen das Bild B1 nicht dargestellt und dessen Lage nur gestrichelt angedeutet ist. Es ist insofern nur die linke obere Bildecke des Bilds B2 dargestellt. Der Überlappungsbereich 24 weist eine waagerechte Breite von weniger als 50 Bildpunkten auf, im dargestellten Ausführungsbeispiel sind es beispielsweise 35 Bildpunkte.

Zur Berechnung eines Deskriptors wird in diesem Ausführungsbeispiel regulär ein Bereich mit einem Radius von acht Bildpunkten um den Schlüsselpunkt 26 verwendet. Dies ist in FIG 3 durch einen Kreis um den Schlüsselpunkt 26 im oberen linken Eck des Bilds B2 dargestellt. Es wird nun bestimmt, wie weit der Abstand 28 eines Schlüsselpunkts vom seitlichen Rand 30 eines Bilds 8, in diesem Fall vom Bild B2, ist. Im dargestellten Ausführungsbeispiel beträgt der Abstand 28 zehn Bildpunkte. Der volle Berechnungsbereich mit einem Durchmesser von 16 Bildpunkten liegt somit noch im Bild B2. Der Berechnung des Deskriptors kann wie üblich erfolgen.

Bei dem in FIG 3 darunter dargestellten Schlüsselpunkt 26 beträgt der Abstand vom Schlüsselpunkt 26 zum seitlichen Rand 30 nur drei Bildpunkte. Die übliche Ermittlung des Deskriptors unter Verwendung des vollen Berechnungsbereichs kann somit nicht stattfinden, da ein Teil des Berechnungsbereichs nicht mehr im Bild B2 dargestellt ist. Insofern muss der Berechnungsbereich, der in FIG 3 durch einen linken abgeschnittenen Teil länglich ist, in modifizierter Weise erfolgen. Der Deskriptor des Schlüsselpunkts 26 wird nur unter Verwendung des in Bild B2 vorhandenen Berechnungsbereichs ermittelt.

Bei dem in FIG 3 am weitesten unten dargestellten Schlüsselpunkt 26 beträgt der Abstand zum seitlichen Bildrand 30 30 Bildpunkte. Eine Verwendung des gesamten kreisrunden Bildbereichs zur Bestimmung des Deskriptors ist somit möglich. Allerdings liegt der Schlüsselpunkt 26 nur fünf Bildpunkte vom seitlichen Rand des benachbarten Bilds B1 entfernt. Der Deskriptor des diesem Schlüsselpunkt 26 zugeordneten Schlüsselpunkts des Bilds B1 kann somit nicht in regulärer Weise unter Verwendung des vollen Berechnungsbereichs berechnet werden, da dieser Bereich vom seitlichen Bildrand des Bilds B1 abgeschnitten ist. Da ein erfolgreicher Deskriptorenvergleich nur möglich ist, wenn die Deskriptoren in analoger Weise berechnet werden, wird auch der Berechnungsbereich des Schlüsselpunkts 26 aus dem Bild B2 irregulär berechnet, wie zu dem darüber liegenden Schlüsselpunkt 26 bereits erläutert wurde. Somit werden die Deskriptoren einander zugeordneter Schlüsselpunkte bereits bevor ihrer Zuordnung in analoger Weise berechnet. Bei der Berechnung der Deskriptoren wird insofern nur der Bereich eines Berechnungsbereichs im Bild 8 verwendet, der innerhalb des Überlappungsbereichs 24 liegt. Der die Grenze des Überlappungsbereichs 24 nach außerhalb des Überlappungsbereichs 24 überschreitende Teil des Berechnungsbereichs wird - selbst wenn er im Bild 8 vorhanden ist - nicht bei der Berechnung der Deskriptoren verwendet.

### Bezugszeichenliste

- 2: Kamerasystem
- 4: Kamera
- 6: Umgebung
- 8: Bild
- 10: Überlappungsbereich
- 12: Gehäuse
- 14: Steuereinheit
- 16: Gesamtbildrahmen
- 18: Datenverbindung
- 20: mechanische Einheit
- 22: Wirkmitteleinheit
- 24: Überlappungsbereich
- 26: Schlüsselpunkt
- 28: Abstand
- 30: Rand

## Patentansprüche

1. Verfahren zur Richtungskalibration von Kameras (4) eines Kamerasystems (2), bei dem die Kameras (4) jeweils ein Bild (8) einer Umgebung (6) aufnehmen,
**dadurch gekennzeichnet,**
**dass** im Überlappungsbereich (24) zweier Bilder (8) zweier Kameras (4) in beiden Bildern (8) jeweils Schlüsselpunkte (26) ermittelt werden, zu jedem Schlüsselpunkt (26) zumindest ein mehrdimensionaler Deskriptor ermittelt wird, die Deskriptoren der beiden Bilder (8) verglichen und den Deskriptoren zugeordnete Schlüsselpunkte (26) der beiden Bilder (8) bei einem Vergleichsergebnis über einem Grenzwert einander zugeordnet werden.

2. Verfahren nach Anspruch 1,
**dadurch gekennzeichnet,**
**dass** die Bildpunkte der beiden Bilder in einen Gesamtbildrahmen (16) eingetragen werden, dessen Bildpunkte ein Gesamtbild bilden und jeweils einer Raumrichtung zugeordnet sind, und die Eintragung in den Gesamtbildrahmen (16) mittels eines Positionsverzeichnisses erfolgt, das eine Zuordnung der Lage der Bildpunkte der Bilder (8) zur Lage im Gesamtbild enthält, aus der Lage der einander zugeordneten Schlüsselpunkte (26) im Gesamtbildrahmen (16) eine Korrekturgröße bestimmt wird und die Eintragung der Bildpunkte in den Gesamtbildrahmen (16) unter Verwendung der Korrekturgröße erfolgt.

3. Verfahren nach Anspruch 2,
**dadurch gekennzeichnet,**
**dass** die Kameras (4) jeweils anhand eines Referenzmusters kalibriert werden und das Positionsverzeichnis unter Verwendung des Kalibrationsergebnisses erstellt wird.

4. Verfahren nach Anspruch 2 oder 3,
**dadurch gekennzeichnet,**
**dass** die Kameras (4) ein Referenzmuster überlappend aufnehmen und das Positionsverzeichnis unter Verwendung des Bildinhalts des Referenzmusters im Überlappungsbereich (24) erstellt wird.

5. Verfahren nach einem der vorhergehenden Ansprüche,
**dadurch gekennzeichnet,**
**dass** die Kameras (4) starr zueinander befestigt sind.

6. Verfahren nach einem der vorhergehenden Ansprüche,
**dadurch gekennzeichnet,**
**dass** die beiden Bilder (8) im infraroten Spektralbereich aufgenommen werden.

7. Verfahren nach einem der vorhergehenden Ansprüche,
**dadurch gekennzeichnet,**
**dass** die Lage eines der Schlüsselpunkte (26) in einem Bild (8) bestimmt wird und die Bestimmung des Deskriptors des Schlüsselpunkts (26) unter Verwendung der Lage erfolgt.

8. Verfahren nach Anspruch 7,
**dadurch gekennzeichnet,**
**dass** als Lage die Entfernung zu einem Bildrand (30) des Bilds (8) bestimmt wird.

9. Verfahren nach Anspruch 7 oder 8,
**dadurch gekennzeichnet,**
**dass** die Lage des Schlüsselpunkts (26) relativ zu beiden, einen Überlappungsbereich (24) bildenden Bildern (8) bestimmt wird und die Bestimmung des Deskriptors unter Verwendung beider Lagen erfolgt.

10. Verfahren nach einem der Ansprüche 7 bis 9,
**dadurch gekennzeichnet,**
**dass** sich die Berechnung des Deskriptors nur auf einen asymmetrischen Bildbereich um den Schlüsselpunkt (26) stützt.

11. Kamerasystem (2) mit mehreren, in verschiedene Richtungen ausgerichteten Kameras (4) zur Aufnahme jeweils eines Bilds (8) einer Umgebung (6) und einer Steuereinheit (14) zum Zusammenfügen der Bilder (8) zu einem Gesamtbild,
**dadurch gekennzeichnet,**
**dass** die Steuereinheit (14) dazu vorbereitet ist, Schlüsselpunkte (26) im Überlappungsbereich (24) eines ersten Bilds (8) einer der Kameras (4) mit einem zweiten Bild (8) einer anderen Kamera (4) zu ermitteln, zu jedem Schlüsselpunkt (26) zumindest ein mehrdimensionalen Deskriptor zu ermitteln, die Deskriptoren der beiden Bilder (8) zu vergleichen und den Deskriptoren zugeordnete Schlüsselpunkte (26) der beiden Bilder (8) bei einem Vergleichsergebnis über einem Grenzwert einander zuzuordnen.
